Europäisches Patentamt

European Patent Office

Office européen des brevets

(19)

(11) Publication number: **0 328 491**
**A2**

## (12) EUROPEAN PATENT APPLICATION

(21) Application number: **89830033.0**

(22) Date of filing: **31.01.89**

(51) Int. Cl.⁴: **C 03 B 33/10**

(30) Priority: **02.02.88 IT 4001888**

(43) Date of publication of application:
**16.08.89 Bulletin 89/33**

(84) Designated Contracting States:
**AT BE CH DE ES FR GB GR IT LI LU NL SE**

(71) Applicant: **COOPMES s.c. a.r.l.**
**Via dell'Agricoltura, 20**
**I-41038 San Felice su Panaro (IT)**

(72) Inventor: **Ricchetti Emer**
**Viale della Resistenza 50**
**I-41100 Modena (IT)**

(74) Representative: **Fiammenghi-Domenighetti, Delfina et al**
**Fiammenghi-Fiammenghi Via Quattro Fontane 31**
**I-00184 Roma (IT)**

(54) Glass sheet scoring unit capable of automatically varying the pressure applied by the scoring tool on the glass sheet to be cut.

㊄ · Glass sheet scoring unit to be assembled on a bridge truck in glass cutting machine, comprising a drive means, a suspension means and a scoring head carried by the drive means through the suspension means. The suspension means consists af an articulated system which is capable of being deformed against the action of first elastic means and further deformed against the action of said first elastic means together with second elastic means when the drive means, such as for example the piston of a pneumatic cylinder, pushes the scoring head against the glass sheet to be cut in a first and a second scoring positions to carry out straight and curved cuts, respectively. The pressure of the scoring head and then of the scoring tool on the glass sheet depends upon the stiffness of the springs, their arrangement and adjustement. The suspension means of the scoring head can be formed as an articulated quadrilateral or as an axial displacement system for the toolholder.

FIG.1

FIG.6

EP 0 328 491 A2

Bundesdruckerei Berlin

Description

# GLASS SHEET SCORING UNIT CAPABLE OF AUTOMATICALLY VARYING THE PRESSURE APPLIED BY THE SCORING TOOL ON THE GLASS SHEET TO BE CUT.

The present invention relates to a scoring unit of a glass cutting machine and, more particularly, to a suspension means for the scoring head used in programmable cutting machines.

Glass sheet scoring units mounted on trucks slideable along bridges extending over the whole length of the sheet to be cut already known, said scoring units comprising a suspension means between a drive means and a scoring head including a tool, generally a wheel supported by a toolholder.

The drive means has function to bring the cutting head close the sheet to be cut through the suspension means. European Patent N.0260879 discloses a scoring unit in which the head driving unit is of the pneumatic type and includes head suspension means under the form of a membrane provided with elastic dampers.

The pneumatic operation of the membrane cause the cutting tool to approach to or viceversa to move apart from the sheet. Thus, the head a single working position in which a support of the toolholder is subjected to two opposing forces, one of which being directed downwards and generated by the membrane, the other being directed upwards and generated by the elastic deformation of the dampers. It is not possible to vary the pressure of the tool on the glass sheet because the stiffness of the suspension means is steady.

A scoring unit comparable to the object of the present invention includes a drive means formed of a pneumatic cylinder, a suspension means including an articulated quadrilateral, i.e. a pantograph, and a scoring head provided with a scoring wheel. In this unit the scoring head is opposed to the pneumatic cylinder across the shorter diagonal of the substantially rhombic quadrilateral, while a pair of elicoidal springs subjected to tensile stress are arranged along the longer diagonal and oppose the deformation of the articulated quadrilateral. The pneumatic cylindrer brings the head close the glass sheet up to the scoring thereof by the deformation of the articulated quadrilateral of the suspension means against the action of the elicoidal springs.Conveniently such springs are manually set to adjust the pressure of the scoring tool on the glass sheet to be cut as a function of both the type and the thickness thereof. It is known, however, that the same thickness and quality of the glass sheet to be cut the pressure exerted by the scoring wheel on the glass sheet in order to successively cut off the glass sheet at the scoring line varies considerably according to whether straight or non-straight cuts should be carried out. Under non-straight cuts circular, curved or otherwise shaped cuts are meant. The known heads and cutting machines used to score the glass sheets do not allow straight and curved scores to be carried out without manually acting on the setting of the spring; this makes impossible to automatically perform a cutting operative cycle if the latter includes straight and curved cuts.

The aim of the present invention is to provide a glass sheet scoring unit provided with a suspension means for the scoring head which is capable of assuming at least two working positions, thus applying at least two different pressures of the head on the glass sheet so as to program and automatically perform a cutting operative cycle including both straight and curved cuts.

The above mentioned aim is achieved by a glass sheet scoring unit which is capable of automatically varying the pressure applied by its scoring tool on the glass sheet to be cut, wherein the suspension means connecting the scoring head to the pneumatic cylinder driving the scoring unit is capable of being deformed in the direction perpendicular to the glass sheet to be cut against the action of at least a pair of springs, which are operating in succession as the cylinder is approaching to the glass sheet, in order to provide for the suspension means a stepwise variable stiffness and then to adjust the pressure of the scoring tool against the glass sheet according to at least two values, one of which suitable for the straight cuts, the other for the curved cuts to be made on the glass sheet. In other words, when the pneumatic cylinder drives the scoring head from a position apart from the glass sheet to a position close the same, only a spring or a pair of opposed springs of the same stiffness being operative, the pressure of the scoring tool on the glass sheet assumes a first value; when the pneumatic cylinder causes the head to become closer the glass sheet in a second position of the scoring unit, the pressure of the scoring tool on the glass sheet assumes a second value, a second spring or a second pair of opposed springs, which increase the stiffness of the suspension means, being operative.

This invention will be more readily apparent from the description of two embodiment thereof with reference to the accompanying drawing annexed by way of non-limitative example only.

Fig. 1 is a front view of a first embodiment of the pantograph scoring unit of the present invention;

Fig. 2 is a cross section along lines A-A of Fig.1;

Fig. 3 is a partially sectioned side view of Fig.1;

Fig. 4 is a cross-section along lines B-B of Fig.2;

Fig. 5 is a front view of a second embodiment of an axially guided scoring unit of the present invention

Fig. 6 is a longitudinal cross-section along lines C-C of Fig.5;

Fig. 7 is a front view of the scoring unit of Fig.5 in working position to carry out straight cuts;

Fig. 8 is a similar view as Figs.5 and 7 of the scoring unit in working position to carry out curved cuts.

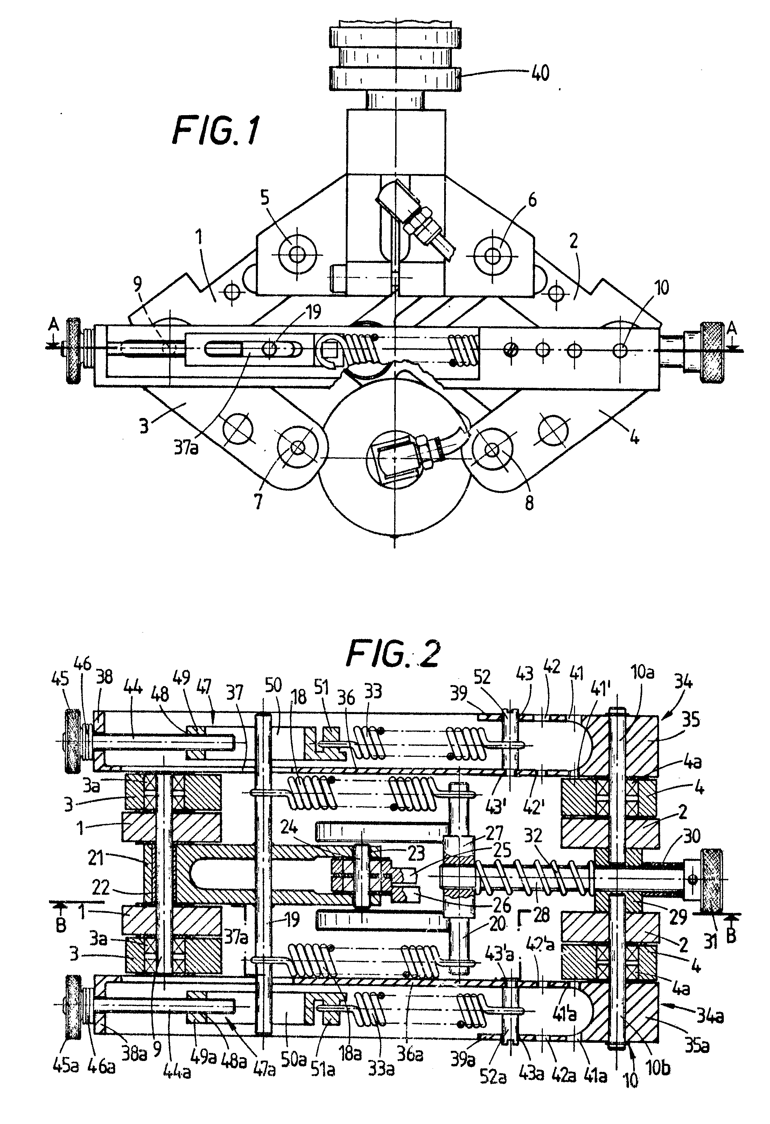

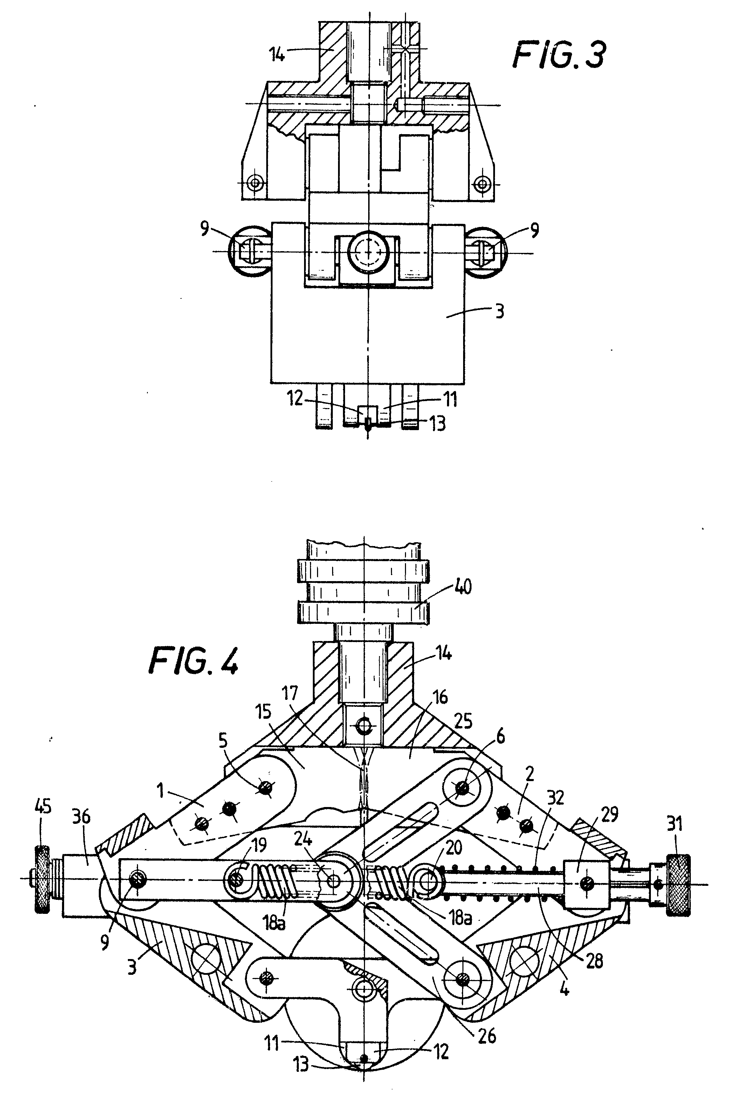

In Figs.1 to 4 there is shown a first embodiment of a scoring unit of the pantograph type including the improvement according to the invention. Articulated rods or members of an already known quadrilateral or rhombic parallelogram are indicated at 1, 2, 3, 4. Hinge pins of the system are designated by 5, 6, 7, 8, 9, 10. Upper rods 1, 2 are integral with inge pins 9, 10 and lower rods 3, 4 are rotatably mounted on the same hinge pins by ball bearings 3a and 4a. As shown particularly in Fig.2, both rods 1, 2 and rods 3, 4 are shaped like a fork, each having two spaced parallel arms hinged the respective hinge pins. Rods 3, 4 are linked at the lower side about pins 7, 8 to a T-shaped member 11 carrying a clip or toolholder 12 of a scoring wheel 13; rods 1, 2 are linked at the upper side about pins 5, 6 to a trapezoidal member 14 ending at the upper side with a sleeve member (Fig.4) capable of being connected to a pneumatic drive cylinder 40. Integral with rods 1, 2 are portions 15, 16 coupled to each other through toothed sectors 17 regulating the opening and the closure of the above described articulated quadrilateral. The opening of the quadrilateral, i.e. the maximum separation of the T-shaped member 11 of the toolholder 12 from the trapezoidal member 14 connected to drive cylinder 40 is limited, as known, by retainers not shown. The rods of the articulated system abuts against such retainers when drive cylindrical 40 does not drive the scoring unit to the working position. This is provided by the arrangement of two pairs of elicoidal springs subjected to tensile stress, the axes of which lie substantially on the same plane of the axes of pins 9, 10 perpendicular thereto. In fact, according to a first embodiment, two springs 18, 18a of one pair abut with their respective hooked ends (Fig.2) against a first pin 19 and a second pin 20 parallel to the former. Pin 19 is fixed by welding transversally to the middle portion of a fork member 21. Fork member 21 has through holes at both ends of the fork. Fork member 21 has at the opposite end a further through hole 22 in which pin 9 is inserted so that such fork member is arranged between the parallel arms of rod 1 of the articulated quadrilateral. A pin 24 is inserted into the through holes 23 of the two ends of fork member 21 opposite to the end with the through hole 22. Two link rods 25 and 26 are rotatably mounted with one end on pin 24 between the arms of the fork member 21. The other ends of said rods are pivoted on hinge pins 6, 8 of the articulated quadrilateral above and below second pin 20 engaging springs 18, 18a respectively. Pin 20 has an enlarged central portion 27 having a central threaded hole perpendicular to the axis of pin 20; a threaded drive rod 28 is screwed in such hole. Rod 28 passes through a small block 29 retained by the inner ends of the coaxial pin portions 10a, 10b forming hinge pin 10.

Drive rod 28 has a coaxial spacer 30 between the small block 29 and a grip 31 of the rod. Provided at the opposite end of the spacer 30 between the enlarged portion 27 of a pin 20 and small block 29 is a spring 32 coaxially mounted on the threaded rod 28. The arrangement of the first pair of springs 18, 18a opposing the closure of the articulated parallelogram has been described above. The second pair of springs, which will be operative successively to the first pair of springs 18, 18a and will engage the latter in order to stiffen the system, thus increasing the pressure of the scoring tool on the glass sheet to be cut, is formed of the elicoidal springs 33, 33a substantially parallel disposed on the same plane outside the springs 18 and 18a, respectively.

Springs 33, 33a are housed in elongated seats 34, 34a respectively, which are simmetrically connnected to the sides of the articulated quadrilateral by hinge pin 10 and pin 19 fixedly connected crosswise to the fork member 21. In fact, both pins 10, 19 project sidewise from the articulated quadrilateral and engage said elongated seats 34, 34a as described herebelow. Each seat 34, 34a of the respective springs 33, 33a is a box-like member having a partially hollow body and a solid end 35, 35a which is bored (Fig.2) to receive the respective portion of pin 10 retained outside by a split pin. Each seat is provided at the inner wall 36, 36a with a slot 37, 37a (Fig.1) allowing pin 19 to transversally slide. Furthermore the wall 38, 38a of each seat at the opposite side of the solid end 35, 35a is bored, and the solid end 35, 35a projects with an outside wall portion 39, 39a having a plurality of through holes 41, 42, 43 and 41a, 42a, 43a, respectively which are coaxial to a corresponding plurality of through holes 41', 42', 43' and 41'a, 42'a, 43'a of lower diameter which are bored coaxially to the former holes into the inner wall. Inserted with wide tolerance into the bored end wall 38, 38a of each seat 34, 34a is a threaded rod 44, 44a ending with a knurled knob 45, 45a. A spring 46, 46a is arranged between knob 45, 45a and the wall 38,38a. The threaded rod 44, 44a of suitable length, as described hereafter, is screwed on a connecting member 47, 47a. Such connecting member has an elongated body which is provided at its wall 49, 49a with a hole 48,48a directed to the threaded rod 44 and 44a and provided with a complementary screw thread. The connecting member 47, 47a has a slot 50, 50a extending over a wide portion of its lenght and an engaging tang 51, 51a for the respective spring 33, 33a. The other end of the spring 33 33a is hooked to a pin 52, 52a selectively inserted into a pair of coaxial holes of the plurality of holes 41, 42, 43 and 41a, 42a, 43a. Slot 50, 50a of the elongated connecting member 47,47a allows the ends of pin 19 to slide. The operation of the scoring unit according to the preferred embodiment of this invention is as follows. Drive cylinder 40 can operate its piston so that the latter can assume at least three positions which are different from each other only as far as the distance of the piston from the glass sheet to be cut is concerned. Said cylinder is connected to the sleeve member 14 of the scoring unit which is located at the opposite side of the scoring wheel 13. When the piston of the drive cylinder 40 is in the first position, the articulated parallelogram is under rest conditions: the first pair of springs 18, 18a hold the rods in reciprocal abutment against the retainers (not shown) and the articulated parallelogram has the maximum opening. The scoring tool 13 does not contact the glass sheet to be cut.

When the piston of the drive cylinder 40 is in a second position which is closer the glass sheet to be cut, the scoring tool contacts the glass sheet under the right interference to carry out straight cuts; the articulated quadrilateral is "squeezed" with the consequence that the distance between pins 9 and 10 is greater than in the first position. The pair springs 18, 18a oppose the reciprocal separation of pins 9 and 10 so that the stiffness thereof is the measure of the pressure applied by the tool 13 on the glass sheet . When the piston of the drive cylinder 40 is in a third position which is the closest to the glass sheet to be cut, the scoring tool 13 contacts the glass sheet under the right interference to carry out curved cuts; the articulated quadrilateral is further squeezed with the consequence that the distance between pins 9 and 10 is increased even more than in other two positions. In particular, the ends of pin 19 will contact the free ends of the threaded pins 44, 44a carrying the connecting member 47, 47a driving the outer springs 33,33a, respectively. It easily understood that the latter springs 33 and 33a oppose the displacement of pin 19 and the whole stiffness of the articulated system is increased with respect to the previous conditions. As a consequence, tool 13 carried by said system acts on the glass sheet with higher pressure than the previous one and will be able to carry out curved cuts.

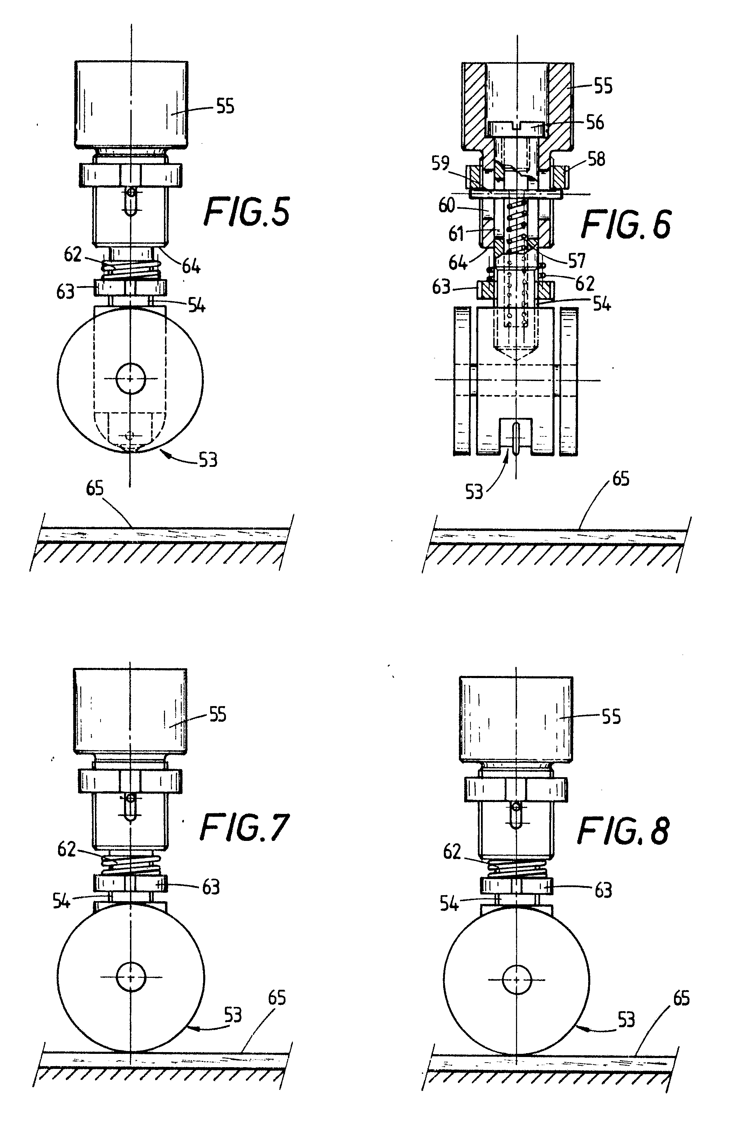

The illustrated and described embodiment is not the only one. Thus a scoring head according to the invention could not be of the pantograph type but of the axial displacement type (Figs. 5 and 8), where the scoring head mounted on a bored screw 54 designated by 53. Screw 54 is axially slideable within a sleeve 55 and is prevented from being unthreaded downwards by its head 56. Sleeve 55 is provided with an outer thread at its lower diameter portion. Inserted in the dead hole axially bored in the screw 54 is a first elicoidal compression spring 57 which can be adjusted by a ring nut 58 screwed on the threaded length of sleeve 55 and interacting with a peg 59 which is slideable within longitudinal slots 60, 61 formed in sleeve 55 and screw 54. A second elicoidal spring 62 coaxial to the first one between a ring nut 63 screwed on the screw 54 and the lower free end 64 of the sleeve 55 is compressed if screw 54 is pushed upwards to a sufficient extent. Sleeve 55 is connected, as known, to the three-position pneumatic cylinder 40 as in case of the pantograph head.

Fig. 5 shows the head in the rest position.

Fig. 7 shows the head in working position for straight cuts. The head contacts a glass sheet 65 to be scored and the force exerted on the glass sheet depends on the load of the spring 57 only; spring 62 does not contact the wall 64 of sleeve 55 yet.

In Fig. 8 sleeve 55 is further lowered so that the force of the scoring head on the glass sheet is equal to the thrust of both springs.

Also the pneumatic three-position cylinder can be replaced by a further mechanical or electromechanical programmable, known device which performs the same duty.

## Claims

1. Glass sheet scoring unit capable of automatically varying the pressure applied by its scoring tool on a glass sheet to be cut, including a drive means, such as the piston of a pneumatic cylinder mounted on a bridge truck of a cutting machine, a suspension means and scoring head carried by a said drive means through said suspension means, said head being provided with a scoring wheel or tool, said suspension means of the scoring head being comprised of an elastic system capable of being deformed against first elastic means under a first working position, characterized in that said elastic system can be further elastically deformed against said first elastic means and against second elastic means (33, 33a, 62) in a second working position, said first elastic means being operative alone and together with said second elastic means according to the distance of the drive means of the scoring unit from the glass sheet to be cut so that a lower or greater pressure of the scoring tool is automatically applied on the glass sheet due to the suitable stiffness of the same elastic means in order to carry out straight and curved cuts.

2. Scoring unit according to claim 1, wherein said suspension means of the scoring head is an articulated quadrilateral substantially formed of a rhombic pantograph and comprising at least four members or fork rods linked to one another in pairs about hinge pins, said pairs being hinged at the lower side on a T-shaped toolholder and at the upper side on a sleeve member connected to the drive means, said first elastic means consisting of a first pair of elicoidal springs subjected to tensile stress which are made integral with said hinge pins having the respective axes on the horizontal symmetry plane of the articulated system, said elicoidal springs opposing the reciprocal separation of said pins, characterized in that said second elastic means consists of a second pair of elicoidal springs (33, 33a) subjected to tensile stress which are made integral with abuting pins (51, 52) having the respective axes lying in said horizontal simmetry plane of the articulated system, at least one of said pins (51, 52) being movable in the direction of reciprocal separation of the hinge pins of the articulated system, said second pair of elicoidal springs (33, 33a) being operative upon opposing the further elongation of said first pair of springs during the reciprocal separation of the hinge pins and upon increasing then the pressure of the scoring tool on the glass sheet to be cut.

3. Scoring unit according to claim 1, wherein said suspension means of the scoring head is an axial displacement system comprising an inside hollow toolholder pin having a lower threaded length which is screwed to the scoring head and an upper end head connected to a sleve which is in turn connected to the drive means of the scoring unit, said sleeve including an upper length having an inner diameter greater than the diameter of the toolholder rod and a lower outside threaded length having an inner diameter lower than that of the head of toolholder pin but greater than the diameter of the rod itself so that the toolholder rod can slide within the sleeve until its head abuts against the upper end of the lower length of the sleeve, and wherein said first elastic means consists of an elicoidal compression spring coaxially placed in the longitudinal inner cavity of the toolholder rod and abuting with one end against the bottom of said cavity and with the other end against a peg passing through corresponding radial slots of the sleeve and the rod, said spring being adjusted by a first ring nut screwed to the threaded length, characterized in that said second elastic means consists of a second elicoidal compression spring (62) caoxially placed with respect to said first spring between the free lower end of the sleeve and a second adjusting ring nut screwed to said toolholder rod.

FIG.1

FIG.2

FIG.3

FIG.4

FIG.5

FIG.6

FIG.7

FIG.8